# EUROPÄISCHE PATENTSCHRIFT

(11) **EP 2 470 860 B1**
(45) Veröffentlichungstag und Bekanntmachung des Hinweises auf die Patenterteilung: **23.10.2013**
(21) Anmeldenummer: 10752709.5
(22) Anmeldetag: 30.07.2010
(51) Int. Cl.: G01C 15/00, B60R 9/00

(54) **LASERSCANVORRICHTUNG ZUR MONTAGE AM DACHTRÄGER EINES FAHRZEUGS**
LASER SCANNING DEVICE FOR MOUNTING ON THE ROOF RACK OF A VEHICLE
DISPOSITIF DE BALAYAGE À LASER DESTINÉ AU MONTAGE SUR LA GALERIE DE TOIT D'UN VÉHICULE

(30) Priorität: 28.08.2009 AT 13552009
(43) Veröffentlichungstag der Anmeldung: 04.07.2012
(73) Patentinhaber: Riegl Laser Measurement Systems GmbH, 3580 Horn (AT)
(72) Erfinder: REICHERT, Rainer, A-3580 Horn (AT); FÄLBL, Thomas, 3580 Horn (AT); RIEGL, Johannes, A-3754 Trabenreith (AT); PFENNIGBAUER, Martin, A-3430 Tulln (AT)
(74) Vertreter: Weiser, Andreas
(86) Internationale Anmeldenummer: PCT/AT2010/000280
(87) Internationale Veröffentlichungsnummer: WO 2011/022741

(56) Entgegenhaltungen:
- NORBERT HAALA, MICHAEL PETER, ALESSANDRO CEFALU, JENS KREMER: "MOBILE LIDAR MAPPING FOR URBAN DATA CAPTURE" 14TH INTERNATIONAL CONFERENCE ON VIRTUAL SYSTEMS AND MULTIMEDIA., 20. Oktober 2008 (2008-10-20), - 25. Oktober 2008 (2008-10-25) XP002608572
- ZHAO HUIJING ET AL: "UPDATING A DIGITAL GEOGRAPHIC DATABASE USING VEHICLE-BORNE LASER SCANNERS AND LINE CAMERAS" PHOTOGRAMMETRIC ENGINEERING AND REMOTE SENSING, AMERICAN SOCIETY FOR PHOTOGRAMMETRY AND REMOTE SENSING, US, Bd. 71, Nr. 4, 1. April 2005 (2005-04-01), Seiten 415-424, XP009085661 ISSN: 0099-1112
- FEDERICA ZAMPA: "Mapping with Mobile Lidar" GIM INTERNATIONAL, Bd. 23, Nr. 4, 1. April 2009 (2009-04-01), XP002608573
- BARBER ET AL: "Geometric validation of a ground-based mobile laser scanning system" ISPRS JOURNAL OF PHOTOGRAMMETRY AND REMOTE SENSING, AMSTERDAM [U.A.] : ELSEVIER LNKD- DOI:10.1016/J.ISPRSJPRS.2007.07.005, Bd. 63, Nr. 1, 1. Januar 2008 (2008-01-01) , Seiten 128-141, XP022418094 ISSN: 0924-2716

## Beschreibung

Die vorliegende Erfindung betrifft eine Laserscanvorrichtung zur Montage am Dachträger eines Fahrzeugs.

Laserscanvorrichtungen an Fahrzeugen sind z.B. aus der DE 10 2007 037 162 A1 bekannt und dienen zur terrestrischen Landvermessung in Form des sogenannten Mobile Scanning bzw. Mobile Mapping. Dabei wird die Topographie der Landschaft von einem fahrenden Land- oder Wasserfahrzeug aus erfaßt, welches den Laserscanner trägt. Mobile Scanning-Systeme sind wesentlich kostengünstiger als luft- oder satellitengestützte Vermessungssysteme und können überdies aus Luftsicht unzugängliche Gebiete erfassen, beispielsweise Straßenzüge, Wasserstraßen, Tunnels, Bergwerksbauten usw.

Die Montage einer Laserscanvorrichtung an einem Mobile-Scanning-Fahrzeug unterliegt mehreren Anforderungen. Zum einen sollte die Montage so hoch wie möglich sein, weil die Laserabtastung sonst durch am Straßenrand parkende Fahrzeuge behindert werden könnte. Zum anderen sollte sie aber auch nur so hoch sein, daß die Durchfahrt unter Leitungen, Brücken und durch Tunnels nicht beeinträchtigt wird. Der Luftwiderstand des Fahrzeuges sollte nicht über Gebühr erhöht werden, und bei Nichtgebrauch sollte die Laserscanvorrichtung zum Schutz demontiert werden können. Schließlich ist zu berücksichtigen, daß Mobile Scanning-Systeme bei Bestückung mit mehreren Laserscannern ein beträchtliches Gewicht von bis zu 100 kg erreichen können, was entsprechende Anforderungen an die Stabilität und Handhabbarkeit stellt.

Derzeit gibt es keine Laserscanvorrichtungen, welche diese Anforderungen zufriedenstellend erfüllen. Zwar sind Laserscanvorrichtungen der einleitend genannten Art bekannt, die an einer herkömmlichen Dachreling des Fahrzeugs montiert werden, doch sind diese Vorrichtungen nur als eine Einheit von oben auf das Fahrzeug aufsetzbar und aufgrund ihrer Größe und ihres Gewichts äußerst schwer handhabbar.

Die Erfindung setzt sich zum Ziel, die Nachteile des bekannten Standes der Technik zu überwinden und eine Laserscanvorrichtung der einleitend genannten Art zu schaffen, welche alle genannten Anforderungen gleichermaßen erfüllt. Dieses Ziel wird mit einer Laserscanvorrichtung der einleitend genannten Art erreicht, die sich gemäß der Erfindung durch einen am Dachträger montierbaren Grundträger in Form eines "X" auszeichnet, auf dem ein Laserscannermodul einen der Zwickel des "X" überspannend verankerbar ist.

Die erfindungsgemäße Konstruktion in Form eines "X" ergibt eine überaus stabile, verwindungssteife Verankerung am Fahrzeugdach. Verschiedenste Laserscanner können parallel zu den Armen des "X" in Schrägstellung zu den Ecken des Fahrzeugs hin ausgerichtet werden, was hohe statische und dynamische Stabilität ergibt. Darüber hinaus kann der Grundträger in seiner Montagestellung auf dem Fahrzeugdachträger belassen und das Laserscannermodul in einfacher Weise zu Transport- und Schutzzwecken abgenommen werden.

Gemäß einer besonders vorteilhaften Ausführungsform der Erfindung umfaßt das Laserscannermodul einen etwa dreieck- oder trapezförmigen Laserscannerträger, an dessen beiden Seiten je ein 2D-Laserscanner montiert ist. Dadurch ist das Laserscannermodul mit seinen Auflagerkräften genau an den "X"-förmigen Laserscannerträger angepaßt.

Unter einem "2D-Laserscanner" wird in der vorliegenden Beschreibung ein Laserscanner verstanden, dessen Laserabtaststrahl sich nur innerhalb einer einzigen Abtastebene bewegt, d.h. einen einzigen Strahlfächer auf die Umgebung aussendet, um aus der Reflexion ein 2D-Profil der Umgebung zu erstellen, welches der Schnittlinie der Abtastebene mit dem Umgebungsrelief entspricht. Durch Fortbewegen des Fahrzeugs in einer abtastebenen-fremden Fahrtrichtung kann dann aus mehreren aufeinanderfolgenden 2D-Profilen ein 3D-Abbild der Umgebung erstellt werden.

Bevorzugt sind die 2D-Laserscanner 360°-2D-Laserscanner. Unter einem "360°-2D-Laserscanner" wird in der vorliegenden Beschreibung ein 2D-Laserscanner verstanden, dessen Laserabtaststrahl in der Abtastebene um volle 360° rotiert.

Durch die erfindungsgemäße Anordnung zweier 360°-2D-Laserscanner an den Seiten eines dreieck- oder trapezförmigen Laserscannerträgers können die Abtastebenen solcher Laserscanner direkt an den rückwärtigen oberen Ecken des Fahrzeugs angeordnet und damit so ausgerichtet werden, daß sie mit keinem Teil des Fahrzeugs in Berührung kommen.

Diese Anordnung eröffnet auch die Möglichkeit, die beiden 360°-2D-Laserscanner mit ihren oberen Abtastebenenhälften zur Fahrtrichtung hin zu kippen, ohne daß sie durch Fahrzeugteile behindert werden.

Besonders vorteilhaft ist es dabei, wenn die 2D-Laserscanner in verschiedenen wählbaren Winkelstellungen am Laserscannerträger festsetzbar sind, um die Vorrichtung an unterschiedliche Montagesituationen und Einsatzzwecke anpassen zu können.

In einer weiteren vorteilhaften Ausführungsform der Erfindung kann vorgesehen werden, daß der Laserscannerträger an seiner Oberseite zusätzlich einen 3D-Laserscanner trägt. Der Laserscannerträger kann auf diese Weise modulartig mit verschiedensten Arten von Laserscannern bestückt werden.

Unter einem "3D-Laserscanner" wird in der vorliegenden Beschreibung ein Laserscanner verstanden, dessen Laserabtaststrahl in beliebige Richtung gerichtet werden kann, z.B. durch Verdrehen eines Strahlfächers um eine zusätzliche Achse, wodurch auch bei stillstehendem Fahrzeug ein 3D-Abbild der Umgebung erzeugt werden kann.

Wird ein optionaler 3D-Laserscanner zusammen mit zwei in Fahrtrichtung gekippten 360°-2D-Laserscannern verwendet, ist es besonders günstig, wenn die beiden 360°-2D-Laserscanner gegenüber dem 3D-Laserscanner nach hinten versetzt sind, so daß ihre Abtastebenen den 3D-Laserscanner ungehindert passieren.

Gemäß einem weiteren bevorzugten Merkmal der Erfindung ist der Laserscannerträger ein Gehäuse mit etwa dreieck- oder trapezförmigem Querschnitt. Ein solches Gehäuse stellt an seinen Wänden gut ausnützbare Schnittstellen zur modulartigen Anbringung verschiedenster Laserscanner dar, wobei die Schrägstellung der Seitenflächen zur Schrägstellung der Laserscanner ausgenützt werden kann.

Bevorzugt kann ein solches Gehäuse auch gleichzeitig dazu verwendet werden, eine Trägheitsmeßeinrichtung und eine Satellitennavigationseinrichtung zu beherbergen. Dabei kann das Gehäuse bevorzugt an seiner Oberseite - bzw. an der Oberseite eines allfällig davon getragenen 3D-Laserscanners - eine Antenne für die Satellitennavigationseinrichtung tragen.

In jedem Fall ist es günstig, wenn gemäß einem weiteren bevorzugten Merkmal der Erfindung das Laserscannermodul über eine Schnellkupplung am Grundträger lösbar verankerbar ist. Dadurch kann das Laserscannermodul, wenn es nicht benutzt wird, rasch und einfach abgenommen werden.

Besonders vorteilhaft ist es dabei, wenn die Schnellkupplung durch Einschieben des Laserscannermoduls in etwa horizontaler Richtung in eine Führung schließbar ist. Dies erleichtert die Handhabung des Laserscannermoduls, welches beträchtliches Gewicht erreichen kann, beim Anbringen und Wiederabnehmen vom Dachträger des Fahrzeugs.

Bevorzugt weist die Schnellkupplung einen Haltebolzen auf, der in Laschen einer Lagerplatte des Grundträgers einschiebbar ist, was eine besonders stabile Verankerung ergibt.

Gemäß einem weiteren bevorzugten Merkmal der Erfindung kann das Laserscannermodul zusätzlich zumindest eine Kamera zur fotographischen Aufnahme der Fahrzeugumgebung tragen.

Schließlich ist es auch besonders günstig, wenn das Laserscannermodul einen gemeinsamen Anschluß für alle seine elektrischen Komponenten besitzt, so daß diese z.B. durch Schließen einer einzigen elektrischen Kupplung mit dem Fahrzeugbordnetz und/oder externen Geräten verbunden werden können, was die praktische Handhabung weiter erleichtert.

Die Erfindung wird nachstehend anhand von in den beigeschlossenen Zeichnungen dargestellten Ausführungsbeispielen näher erläutert. In den Zeichnungen zeigen:
die Fig. 1 und 2 die Laserscanvorrichtung der Erfindung in der Montagestellung auf einem Fahrzeug in der Seitenansicht und der Draufsicht;
Fig. 3 die Laserscanvorrichtung von Fig. 1 in einer Schrägansicht, wobei einer der beiden seitlichen Laserscanner zur Veranschaulichung entfernt wurde; und
Fig. 4 eine weitere Ausführungsform der Laserscanvorrichtung der Erfindung in der Seitenansicht.

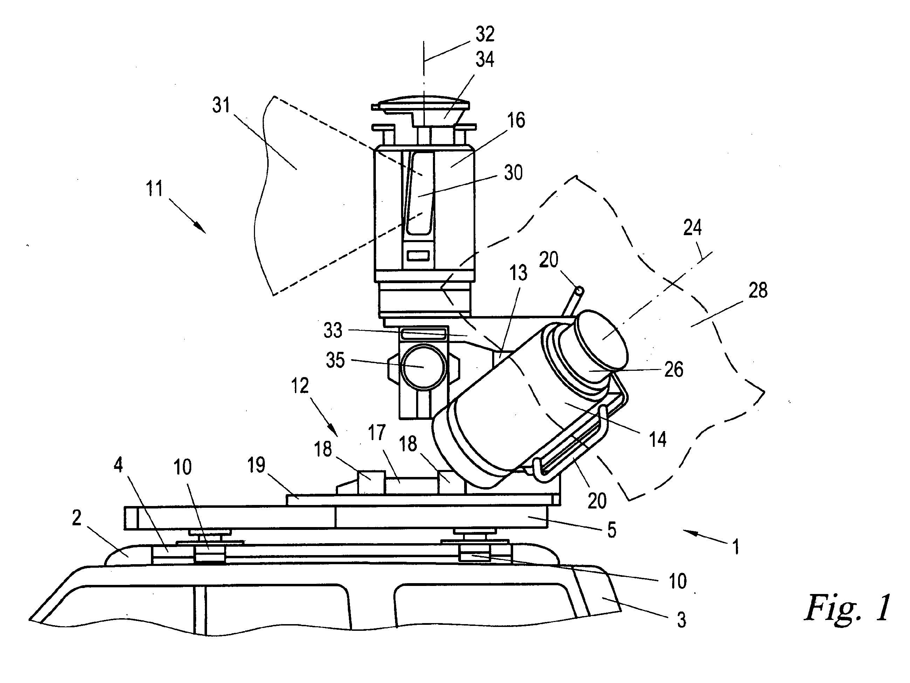

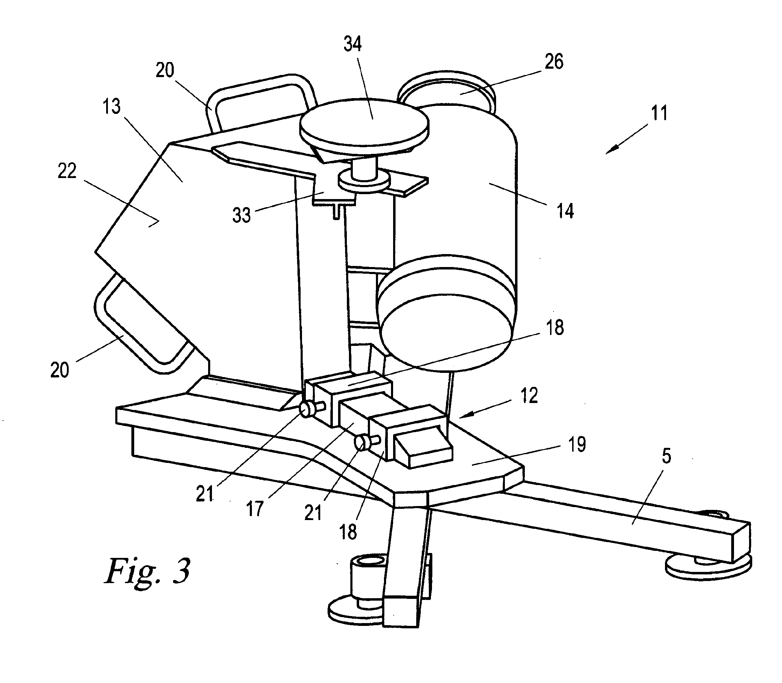

In den Fig. 1 bis 3 ist eine Laserscanvorrichtung 1 zur Montage am Dachträger 2 eines Fahrzeugs 3 gezeigt. Der Dachträger 2 ist z.B. ein herkömmlicher PKW-Dachträger in Form zweier Dachrelingschienen 3, 4.

Die Laserscanvorrichtung 1 umfaßt einen Grundträger 5 in Form eines "X", dessen vier "X"-Arme 6 - 9 jeweils mit einer Klemme 10 an den Dachrelingschienen 3, 4 festklemmbar sind. Auf dem Grundträger 5 ist ein Laserscannermodul 11 in einer den Zwickel zwischen den beiden rückwärtigen "X"-Armen 8, 9 überspannenden Lage montiert, und zwar mit Hilfe einer Schnellkupplung 12.

Das Laserscannermodul 11 setzt sich aus einem etwa dreieck- oder trapezförmigen Laserscannerträger 13 zusammen, der an seiner Unterseite die Schnellkupplung 12 und an seinen Seiten sowie seiner Oberseite verschiedenste Laserscanner 14 - 16 trägt.

Im gezeigten Beispiel ist der Laserscannerträger 13 durch ein kastenartiges Gehäuse mit - von oben gesehen - etwa trapezförmigem Querschnitt gebildet, das im Inneren eine Trägheitsmeßeinrichtung ("inertial measurement unit", IMU) und einer Satellitennavigationseinrichtung ("global navigation satellite system", GNSS) aufnimmt, mit deren Hilfe die Bewegungsbahn und -orientierung ("Trajektorie") des Laserscannermoduls 11 ermittelt und als Referenz für die Laserscannerdaten bereitgestellt werden kann, wie dem Fachmann bekannt.

Die Schnellkupplung 12 kann auf jede in der Technik bekannten Art ausgebildet sein, beispielsweise als Bajonett- oder Schnappkupplung oder als Schwalbenschwanzführung mit Rastklinken. Im gezeigten Beispiel ist die Schnellkupplung 12 eine Schiebeführung für einen vom Boden des Laserscannerträgers 13 auskragenden Haltebolzen 17, der in Laschen 18 einer Lagerplatte 19 des Grundträgers 5 horizontal einschiebbar ist.

Der Laserscannerträger 13 kann mit Handgriffen 20 ausgestattet sein und mittels dieser auf Höhe des Autodachs angehoben und dann horizontal in die Laschen 18 eingeführt werden, was die Montage erleichtert. Mittels entsprechender Rastklinken, Stiften oder Schrauben 21, welche in die Laschen 18 oder die Lagerplatte 19 eingreifen, wird das Laserscannermodul 11 am Grundträger 5 fixiert.

Das Laserscannermodul 11, insbesondere das Gehäuse des Laserscannerträgers 13, ist bevorzugt mit einem einzigen gemeinsamen elektrischen Anschluß, z.B. einem Multipin-Steckverbinder, zur Kontaktierung aller seiner elektronischen Komponenten ausgestattet.

Die an den beiden Seiten des Laserscannerträgers 13 montierten Laserscanner 14, 15 sind bevorzugt 360°-2D-Laser-scanner, welche überdies derart schräggestellt an den Seitenflächen 22, 23 des Laserscannerträgers 13 montiert werden, daß ihre Rotationsachsen 24, 25 in Bezug auf das Fahrzeug 3 nach oben, hinten und außen gekippt sind. Die 360°-2D-Laserscanner 14, 15 sind dabei bevorzugt in verschiedenen wählbaren Winkelstellungen an den Seitenflächen 22, 23 des Laserscannerträgers festsetzbar, beispielsweise mit Hilfe eines Lochrasters in den Seitenflächen 22, 23 für entsprechende Montageschrauben der Laserscanner 14, 15. Alternativ könnten die 360°-2D-Laserscanner 14, 15 auch mittels entsprechender Schwenk- bzw. Drehlagerungen am Laserscannerträger 13 winkelverdrehbar gelagert sein, z.B. über arretierbare Drehkränze an den Seitenflächen des Laserscannerträgers 13.

Die 360°-2D-Laserscanner 14, 15 besitzen jeweils einen Scannerkopf 26, 27 mit einem 360°-Rundumaustrittsfenster für einen rotierenden Laserabtaststrahl, sodaß sie ihre Umgebung jeweils in einer einzigen Abtastebene 28, 29 abtasten. Ein Beispiel eines derartigen 360°-2D-Laserscanners ist das Produkt mit der Markenbezeichnung VQ^{®} 250 der Firma RIEGL Laser Measurement Systems GmbH in Horn, Österreich.

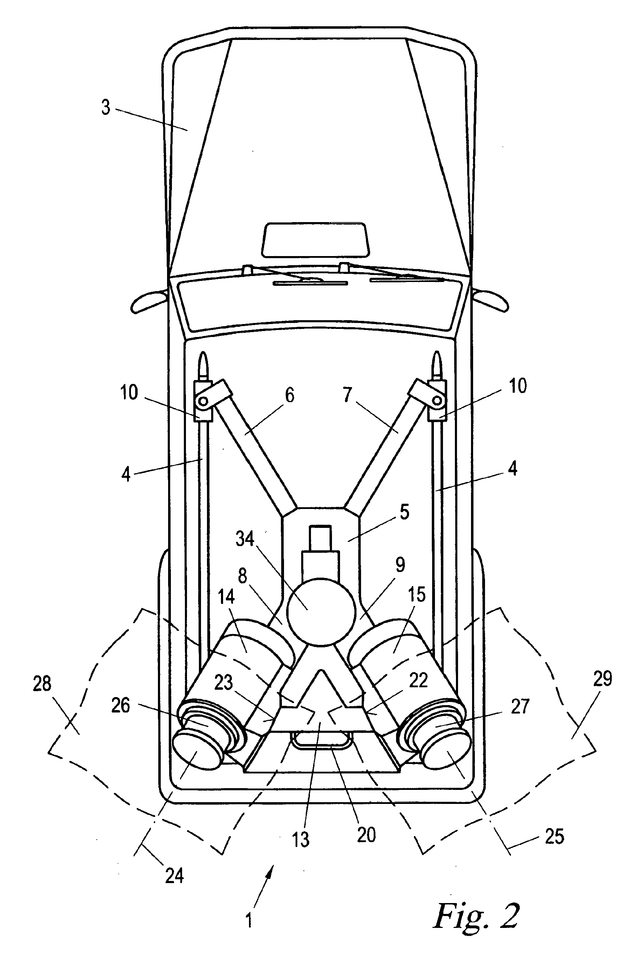

Wie aus den Fig. 1 und 2 ersichtlich, sind die oberen Hälften der Abtastebenen 28, 29 zur Fahrtrichtung hin und die unteren Hälften der Abtastebenen 28, 29 vom Fahrzeug weg gekippt, sowie die äußeren Hälften der Abtastebenen 28, 29 zur Fahrtrichtung hin und inneren Hälften der Abtastebenen 28, 29 von der Fahrtrichtung weg gekippt. Dadurch kommen die Abtastebenen 28, 29 der 360°-2D-Laserscanner 14, 15 mit keinerlei Fahrzeugteilen in Berührung und können ungehindert die Fahrzeugumgebung abtasten.

Der Laserscannerträger 13 kann an seiner Oberseite einen optionalen 3D-Laserscanner 16 lagern. Der 3D-Laserscanner 16 sendet über ein schlitzförmiges Austrittsfenster 30 einen ganzen Laserstrahlfächer 31 aus und kann zusätzlich um seine Hochachse 32 rotieren, um ein 3D-Abbild der Umgebung zu erstellen. Ein Beispiel eines derartigen 3D-Laserscanners ist das Produkt mit der Markenbezeichnung VZ^{®} 400 der Firma RIEGL Laser Measurement Systems GmbH in Horn, Österreich.

Die 360°-2D-Laserscanner 14, 15 sind bezüglich des 3D-Laserscanners 16 nach hinten versetzt, beispielsweise indem letzterer an einem Kragarm 33 an der Oberseite des Gehäuses 13 nach vorne versetzt ist, sodaß die Abtastebenen 28, 29 den 3D-Laserscanner 16 ungehindert passieren können.

An der Oberseite des 3D-Laserscanners 16 - bzw. an der Oberseite des Laserscannerträgers 13, falls kein 3D-Laserscanner 16 vorhanden ist - kann eine Antenne 34 für die Satellitennavigationseinrichtung angeordnet werden. Ferner können an den Seiten des Laserscannermoduls 11, z.B. direkt am Laserscannerträger 13 oder am Kragarm 33, eine oder mehrere Kameras 35 zur fotographischen Aufnahme der Fahrzeugumgebung montiert werden.

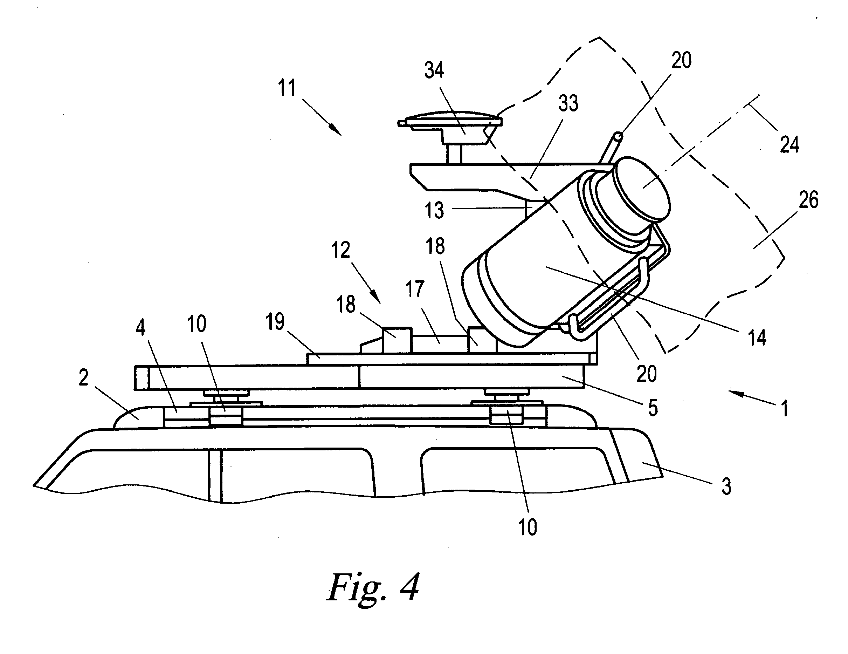

Fig. 4 zeigt eine alternative Ausführungsform der Vorrichtung 1 mit einem vereinfachten Laserscannermodul 11, welches nur zwei seitliche 360°-2D-Laserscanner 14, 15 besitzt, jedoch keinen oberen 3D-Laserscanner 16 und auch keine Kameras 35. In diesem Fall ist die Antenne 34 direkt auf dem Kragarm 33 bzw. der Oberseite des Laserscannerträgers 13 montiert.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Laserscanvorrichtung (1) zur Montage am Dachträger (2) eines Fahrzeugs (3), **gekennzeichnet durch** einen am Dachträger (2) montierbaren Grundträger (5) in Form eines "X", auf dem ein Laserscannermodul (11) einen der Zwickel des "X" überspannend verankerbar ist.

2. Laserscanvorrichtung nach Anspruch 1, **dadurch gekennzeichnet, daß** das Laserscannermodul (11) einen etwa dreieck-oder trapezförmigen Laserscannerträger (13) umfaßt, an dessen beiden fahrzeugseitlichen Seiten je ein 2D-Laserscanner (14, 15) montiert ist.

3. Laserscanvorrichtung nach Anspruch 2, **dadurch gekennzeichnet, daß** die 2D-Laserscanner (14, 15) 360°-2D-Laserscanner sind.

4. Laserscanvorrichtung nach Anspruch 3, **dadurch gekennzeichnet, daß** die beiden 360°-2D-Laserscanner (14, 15) mit ihren oberen Abtastebenenhälften zur Fahrtrichtung gekippt sind.

5. Laserscanvorrichtung nach einem der Ansprüche 2 bis 4, **dadurch gekennzeichnet, daß** die 2D-Laserscanner (14, 15) in verschiedenen wählbaren Winkelstellungen am Laserscannerträger (13) festsetzbar sind.

6. Laserscanvorrichtung nach einem der Ansprüche 2 bis 5, **dadurch gekennzeichnet, daß** der Laserscannerträger (13) an seiner Oberseite zusätzlich einen 3D-Laserscanner (16) trägt.

7. Laserscanvorrichtung nach Anspruch 6, **dadurch gekennzeichnet, daß** die beiden 360°-2D-Laserscanner (14, 15) gegen-über dem 3D-Laserscanner (16) in Bezug auf das Fahrzeug (3) nach hinten versetzt sind, so daß ihre Abtastebenen (28, 29) den 3D-Laserscanner (16) ungehindert passieren.

8. Laserscanvorrichtung nach einem der Ansprüche 2 bis 7, **dadurch gekennzeichnet, daß** der Laserscannerträger (13) ein Gehäuse mit etwa dreieck- oder trapezförmigem Querschnitt ist.

9. Laserscanvorrichtung nach Anspruch 8, **dadurch gekennzeichnet, daß** das Gehäuse (13) eine Trägheitsmeßeinrichtung und eine Satellitennavigationseinrichtung beherbergt.

10. Laserscanvorrichtung nach Anspruch 9, **dadurch gekennzeichnet, daß** das Gehäuse (13) an seiner Oberseite - bzw. an der Oberseite eines allfällig davon getragenen 3D-Laserscanners (16) - eine Antenne (34) für die Satellitennavigationseinrichtung trägt.

11. Laserscanvorrichtung nach einem der Ansprüche 1 bis 10, **dadurch gekennzeichnet, daß** das Laserscannermodul (11) über eine Schnellkupplung (12) am Grundträger (5) lösbar verankerbar ist.

12. Laserscanvorrichtung nach Anspruch 11, **dadurch gekennzeichnet, daß** die Schnellkupplung (12) durch Einschieben des Laserscannermoduls (11) in etwa horizontaler Richtung in eine Führung (18, 19) schließbar ist.

13. Laserscanvorrichtung nach Anspruch 12, **dadurch gekennzeichnet, daß** die Schnellkupplung (12) einen Haltebolzen (17) aufweist, der in Laschen (18) einer Lagerplatte (19) des Grundträgers (5) einschiebbar ist.

14. Laserscanvorrichtung nach einem der Ansprüche 1 bis 13, **dadurch gekennzeichnet, daß** das Laserscannermodul (11) zumindest eine Kamera (35) zur fotographischen Aufnahme der Fahrzeugumgebung trägt.

15. Laserscanvorrichtung nach einem der Ansprüche 1 bis 14, **dadurch gekennzeichnet, daß** das Laserscannermodul (11) einen gemeinsamen Anschluß für alle seine elektrischen Komponenten besitzt.

## Claims

1. Laser scanning device (1) for mounting on the roof rack (2) of a vehicle (3), **characterized by** a base support (5) configured in the shape of an "X" for mounting on the roof rack (2) and on which a laser scanning module (11) that spans one of the forks of the "X" can be fixed.

2. Laser scanning device according to Claim 1, **characterized in that** the laser scanning module (11) comprises a substantially triangular or trapezoidal-shaped laser scanner support and a 2D-laser scanner (14, 15) is mounted on each of the two sides thereof which are turned to the vehicle sides.

3. Laser scanning device according to Claim 2, **characterized in that** the 2D-laser scanners (14, 15) are 360°-2D-laser scanners.

4. Laser scanning device according to Claim 3, **characterized in that** the upper halves of the scanning planes of the two 360°-2D-laser scanners (14, 15) are tipped to the direction of travel.

5. Laser scanning device according to one of Claims 2-4, **characterized in that** the 2D-laser scanners (14, 15) can be locked in different, selected angular positions on the laser scanner support (13).

6. Laser scanning device according to one of Claims 2-5, **characterized in that** the laser scanner support (13) bears an additional 3D-laser scanner (16) on the upper side thereof.

7. Laser scanning device according to Claim 6, **characterized in that** the two 360°-2D-laser scanners (14, 15) are offset to the rear, relating to the vehicle (3), with respect to the 3D-laser scanner (16) so that their scanning planes (28, 29) pass the 3D-laser scanner (16) unhindered.

8. Laser scanning device according to one of Claims 2-7, **characterized in that** the laser scanner support (13) is a housing with a substantially triangular or trapezoidal-shaped cross section.

9. Laser scanning device according to Claim 8, **characterized in that** the housing (13) accommodates an inertial measuring device and a satellite navigation device.

10. Laser scanning device according to Claim 9, **characterized in that** the housing (13) bears on the upper side thereof - or on the upper side of a 3D-laser scanner (16) possibly supported thereon - an antenna (34) for the satellite navigation device.

11. Laser scanning device according to one of Claims 1-10, **characterized in that** the laser scanner module (11) is detachably anchored to the base support (5) by means of a fast-acting coupling (12).

12. Laser scanning device according to Claim 11, **characterized in that** the fast-acting coupling (12) can be closed by sliding the laser scanner module (11) in a substantially horizontal direction into a guide (18, 19).

13. Laser scanning device according to Claim 12, **characterized in that** the fast-acting coupling (12) features a retaining bolt (17) that can be inserted into flaps (18) of a bearing plate (19) of the base support (5).

14. Laser scanning device according to one of Claims 1-13, **characterized in that** the laser scanner module (11) bears at least one camera (35) for photographic recording of the vehicle environment.

15. Laser scanning device according to one of Claims 1-14, **characterized in that** the laser scanner module (11) features a common connection for all the electrical components thereof.

## Revendications

1. Dispositif de balayage laser (1) destiné à être monté sur la galerie (2) d'un véhicule (3), **caractérisé par** un support de base (5) sous la forme d'un "X", susceptible d'être monté sur la galerie (2), sur lequel un module de balayage laser (11) peut être ancré de manière à couvrir un des entrejambes du "X".

2. Dispositif de balayage laser selon la revendication 1, **caractérisé en ce que** le module de balayage laser (11) comprend un support de capteurs laser (13) présentant une forme approximativement triangulaire ou trapézoïdale, un capteur laser 2D (14, 15) étant respectivement monté sur chacun de ses deux côtés tournés vers les côtés du véhicule.

3. Dispositif de balayage laser selon la revendication 2, **caractérisé en ce que** les capteurs laser 2D (14, 15) sont des capteurs laser 2D à 360°.

4. Dispositif de balayage laser selon la revendication 3, **caractérisé en ce que** les deux capteurs laser 2D à 360° (14, 15) sont basculés avec leurs moitiés de plan de balayage supérieures dans le sens de déplacement du véhicule.

5. Dispositif selon l'une des revendications 2 à 4, **caractérisé en ce que** les capteurs laser 2D (14, 15) peuvent être fixés sur le support de capteurs laser (13) selon différents angles de direction au choix.

6. Dispositif de balayage laser selon l'une des revendications 2 à 5, **caractérisé en ce que** le support de capteurs laser (13) porte également un capteur laser 3D (16) sur sa surface supérieure.

7. Dispositif de balayage laser selon la revendication 6, **caractérisé en ce que** les deux capteurs lasers 2D à 360° (14, 15) sont décalés vers l'arrière, en termes du véhicule (3), par rapport au capteur laser 3D (16), de sorte que leurs plans de balayage (28, 29) dépassent sans gêne le capteur laser 3D (16).

8. Dispositif de balayage laser selon l'une des revendications 2 à 7, **caractérisé en ce que** le support de capteurs laser (13) est un boîtier avec une section transversale présentant une forme approximativement triangulaire ou trapézoïdale.

9. Dispositif de balayage laser selon la revendication 8, **caractérisé en ce que** le boîtier (13) héberge un système de mesure de l'inertie et un système de navigation par satellite.

10. Dispositif de balayage laser selon la revendication 9, **caractérisé en ce que**, sur sa surface supérieure - ou sur la surface supérieure d'un capteur laser 3D (16) porté éventuellement par celle-ci - le boîtier (13) porte une antenne (34) pour le système de navigation par satellite.

11. Dispositif de balayage laser selon l'une des revendications 1 à 10, **caractérisé en ce que** le module de balayage laser (11) peut être ancré de façon détachable dans le support de base (5) par un accouplement rapide (12).

12. Dispositif de balayage laser selon la revendication 11, **caractérisé en ce que** l'accouplement rapide (12) peut être fermé en insérant le module de balayage laser (11) dans une direction approximativement horizontale dans un guidage (18, 19).

13. Dispositif de balayage laser selon la revendication 12, **caractérisé en ce que** l'accouplement rapide (12) comporte un boulon de maintien (17) insérable dans des pattes (18) d'une plaque de support (19) du support de base (5).

14. Dispositif de balayage laser selon l'une des revendications 1 à 13, **caractérisé en ce que** le module de balayage laser (11) porte au moins une caméra (35) pour l'enregistrement photographique de l'environnement du véhicule.

15. Dispositif de balayage laser selon l'une des revendications 1 à 14, **caractérisé en ce que** le module de balayage laser (11) possède une connexion commune pour l'ensemble de ses composants électriques.
